# EUROPEAN PATENT APPLICATION

(11) **EP 2 873 519 A1**
(43) Date of publication of application: **20.05.2015**
(21) Application number: 14190911.9
(22) Date of filing: 29.10.2014
(51) Int. Cl.: B32B 5/02, B32B 7/04, B32B 27/08, B32B 27/12, B32B 27/32, B32B 3/06, B32B 3/08, B32B 3/10, B32B 3/26, B65D 30/06, B65D 33/02, B65D 33/04

(54) **Packaging Material for Fruit and Vegetable Produce**

(30) Priority: 18.11.2013 GB 201320311
(71) Applicant: Amcor Flexibles Kreuzlingen AG, 8280 Kreuzlingen (CH)
(72) Inventor: Granville, Russell, Ledbury, Hertfordshire HR8 2DJ (GB)
(74) Representative: Wardle, Callum Tarn

(57) **Abstract**

A packaging material for fruit and vegetable produce comprising a longitudinal band of plastic film, and a plurality of longitudinal strips of plastic mesh overlying the plastic film, each strip of plastic mesh being spaced apart from an adjacent strip, the edges of each strip of plastic mesh having an overlying further strip of plastic film bonded through the plastic mesh to the underlying plastic film wherein each strip of plastic mesh is secured to the longitudinal band of plastic film, and wherein the band of plastic film has a series of openings formed therein underlying each of the strips of plastic mesh.

## Description

In many retail environments it is preferable for various fruit and vegetable produce to be displayed and packaged in packages holding a discrete quantity of the produce, as opposed to providing the produce in bulk. One type of packaging used for this purpose comprises a net bag in which the produce is retained. A disadvantage with such net bags is that it is not possible to print information, such as the type of produce and storage guidelines, directly onto the net material comprising the bag. Consequently, such bags often incorporate an additional separate plastic film strip on which the desired information is printed. Alternative packaging includes plastic film bags that incorporate one or more regions comprising a plastic mesh. Such packaging has the advantage that the plastic film may be printed with the desired information, whilst the plastic mesh enhances the visibility of the produce contained within the bag and allows free access of air to the produce to maintain the produce in optimum condition. In such packaging the plastic mesh is generally heat sealed directly to the adjacent plastic film. To achieve this the plastic mesh must be of a compatible material to the plastic film and be of relatively heavy weight per square metre, typically in the region of 24 grams per square metre (gsm). The heavier weight of the plastic mesh results in the mesh having relatively wide individual strands which facilitates heat sealing to adjacent plastic film. However, the relatively high weight of such plastic mesh, and the inevitable wide strand width and matt finish reduces the visual appeal of the packaging overall and limits the degree to which the produce can be viewed through the mesh. This visual appearance and ability to clearly view the produce within the packaging is of particular importance for certain produce, such as for example citrus fruits, for which customers typically like to clearly view the produce. However, it is difficult to heat seal plastic mesh of lower weight to the plastic film due to the reduced strand dimensions of the lower weight mesh. It is therefore difficult to simply substitute lower weight mesh, with larger openings between strands, into such packaging bags.

According to a first aspect of the present invention there is provided a packaging material for fruit and vegetable produce comprising a longitudinal band of plastic film, and a plurality of longitudinal strips of plastic mesh overlying the plastic film, each strip of plastic mesh being spaced apart from an adjacent strip, the edges of each strip of plastic mesh having an overlying further strip of plastic film bonded through the plastic mesh to the underlying plastic film wherein each strip of plastic mesh is secured to the longitudinal band of plastic film, and wherein the band of plastic film has a series of openings formed therein underlying each of the strips of plastic mesh.

The further strips of plastic film may be bonded to the underlying plastic film by heat sealing.

Preferably, one or more of the plastic film and further film strips comprise polyethylene or polypropylene.

The plastic film may have a thickness substantially in the range of 30-60 microns.

The plastic mesh may have a weight of substantially 8 gms. The plastic mesh may comprise polypropylene.

According to a second aspect of the present invention there is provided a bag for fruit and vegetable produce formed from a continuous length of the packaging material according to any one of claims 1 to 6 formed into a tube by means of a longitudinal band and subsequently sub-divided into individual bags by means of a plurality of further bond lines orthogonal to the longitudinal band, wherein each further bond line is located in the plastic film between adjacent openings in said film. The bag may have gusseted sides.

According to a further aspect of the present invention there is provided a method of producing a packaging material for fruit and vegetable produce comprising: providing a continuous band of plastic film, cutting out a series of openings in the plastic film, providing a plurality of strips of plastic mesh overlying respective lines of said openings in the plastic film, providing a plurality of reinforcing strips, each strip overlying an edge of a strip of plastic mesh, and bonding the reinforcing strips to the underlying plastic film, whereby the edges of the plastic mesh strips are encapsulated between the reinforcing strips and the plastic film.

Embodiments of the invention will be described below, by way of non-limiting example only, with reference to the accompanying figures, of which:
Figure 1 schematically illustrates packaging material according to embodiments of the present invention;
Figure 2 schematically illustrates the packaging material illustrated in Figure 1 in cross section;
Figure 3 schematically illustrates a bag formed from the packaging material shown in Figures 1 and 2; and
Figure 4 schematically illustrates a cross section of the bag shown in Figure 3.

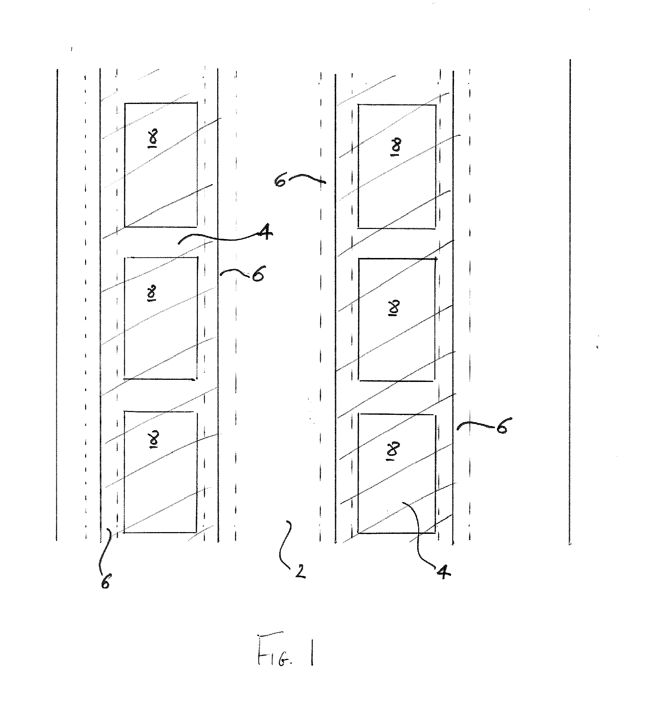

Figure 1 schematically illustrates a portion of the package material according to an embodiment of the present invention. The packaging material includes a longitudinal band of plastic film 2, with a number of individual strips of plastic mesh 4 placed over the film. In the particular embodiment illustrated two separate strips of plastic mesh 4 are provided and are evenly spaced across the plastic film width. Overlying the edges of the plastic mesh strips 4 are further, reinforcing, strips 6 of plastic film. The further reinforcing strips 6 are relatively narrow relative to the width of the plastic mesh strips 4, with a width merely sufficient to overlie the edge regions of the plastic mesh strips 4. The plastic film reinforcing strips 6 are bonded to the underlying plastic film band 2, for example by heat sealing or adhesive, through the apertures of the plastic mesh 4. In this way the plastic mesh strips 4 are secured to the plastic film band 2 along their edge regions. A series of openings, or windows are cut in the plastic film 2 underlying the plastic mesh strips 4. The number of openings 8 and their shape or relative sizes can vary between different embodiments of the present invention.

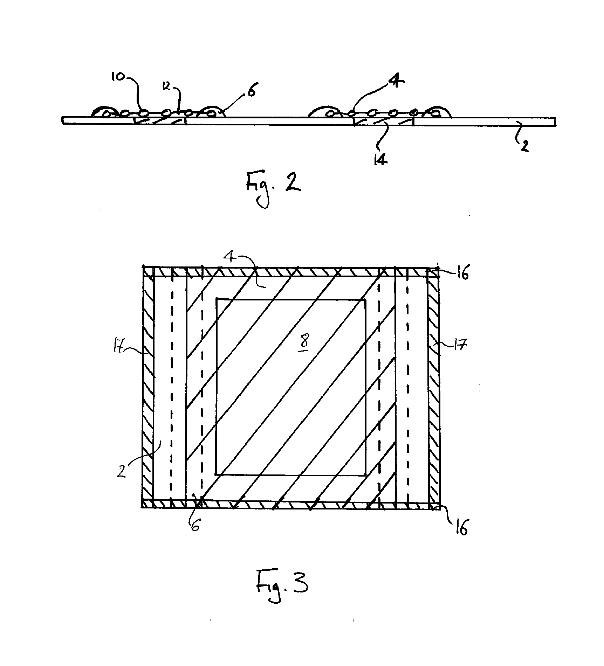

Figure 2 schematically illustrates a cross section of the packaging material illustrated in Figure 1. The continuous film layer 2 has a number of separate strips of plastic mesh 4 overlying it as described with reference to Figure 1. The plastic mesh comprises a number of individual strands 10, 12 arranged orthogonally to one another. In some embodiments the material of the mesh strip is polypropylene, and with the average weight of the mesh material being approximately 8 gsm, with each strand being approximately 4 mm apart from one another. It will be appreciated the weight and strand spacing of the mesh strips is not critical in itself but it is desirable for the mesh weight to be such that good visibility of the product contained within the packaging material is achieved. The reinforcing strip 6 (encapsulation film) is, as described with reference to Figure 1, placed over the edge regions of each of the strips of the plastic mesh 4 and is bonded to the underlying plastic film 2. Consequently, in preferred embodiments the reinforcing strip 6 and continuous film 2 are made from the same material, preferably polyethylene or polypropylene. Typical thickness of the reinforcing strips and continuous film 2 is in the region o 30-60 microns, with a more typical thickness being 30-35 microns. It will be appreciated that the mesh of the desired weight will not satisfactorily heat seal directly to the continuous film 2. The shaded areas 14 of the continuous film 2 shown in Figure 2 represent the openings 8 cut in the continuous film 2.

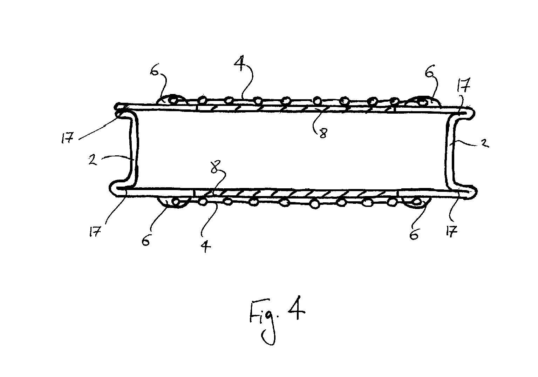

Figure 3 schematically illustrates a bag for fruit and vegetable products, including citrus fruits, made from the packaging material shown in Figures 1 and 2. To form the bag a continuous length of the packaging material shown in Figures 1 and 2 is folded over and the overlapping edges bonded together to form a continuous tube, as is known in the art. The tube is sealed closed by heat sealing the tube together. Each horizontal heat seal 16 is formed in the regions of continuous plastic film 2 in between the openings/windows 8 formed in the plastic film such that each heat seal 16 bonds the two opposing layers of continuous film material 2 to one another across the entire width of the bag. In practice, a first, lower horizontal heat seal 16 will be formed to form the bottom of the bag, the bag will be subsequently filled with the desired produce, and then the second, upper heat seal 16 will then be formed to close the bag. In preferred embodiments, and as illustrated in Figures 3 and 4, vertical side seams 17 are created by heat sealing folds of the plastic film 2 in order to create gussets in the side of the bag, as most clearly seen in Figure 4. However, it will be appreciated that such gussets may be omitted, with the bag being formed with a single vertical seal bonding the packaging material into a continuous tube.

Figure 4 schematically illustrates a cross section of the bag in a region other than the heat seal 16. In the particular embodiment illustrated the packaging material is formed into a continuous tube by overlapping an edge of the continuous plastic film 2 with the reinforcing strip 6 located at the opposite edge of the packaging material and further forming a number of vertical heat seals 17 to define gusseted side panels to the bag, with the side panels being formed from regions off the plastic film 2 without the windows 8 formed therein, whilst the front & rear panels of the bag are formed from the plastic film with the plastic net overlying the windows 8 in the plastic film 2. However, it will be appreciated that by controlling the placement of the plastic mesh strips 4 on the continuous plastic film during manufacture, each edge of the plastic material may be formed in the continuous film 2 only, such that the continuous tube is formed by heat sealing the two edges of plastic film 2 only.

It will be noted that by using a continuous band of plastic film 2 and subsequently forming windows 8 therein, the bag produced from the packaging material has regions at the top and bottom thereof in which there is a continuous band of plastic film material 2 extending around the circumference of the bag. One advantage provided by this arrangement is that the region having the continuous band of plastic film 2 enhances the strength of the bag because any stresses or strains imposed on the bag material, for example, purely by virtue of the weight of the produce contained therein or arising through handling of the bags, is carried through this continuous region of plastic film material in addition to the bonds between the plastic film material 2 and the reinforcing strip 6 thus enhancing the overall strength of the bag formed from the packaging material. An additional advantage is that the continuous band of film material 2 provides an area on which packaging information can be printed or adhered, without interference to the product contained within the bag.

In one example the packaging material is manufactured using conventional film unwind units, net wind units and punch units. The main plastic film 2 will be unwound from a roll and will first be printed, before being die cut to remove the windows 8 using an appropriate number of punch units. Then the net and reinforcement strips will be unwound from individual unwind units and heat sealed to the plastic film 2.

## Claims

1. A packaging material for fruit and vegetable produce comprising a longitudinal band of plastic film, and a plurality of longitudinal strips of plastic mesh overlying the plastic film, each strip of plastic mesh being spaced apart from an adjacent strip, the edges of each strip of plastic mesh having an overlying further strip of plastic film bonded through the plastic mesh to the underlying plastic film wherein each strip of plastic mesh is secured to the longitudinal band of plastic film, and wherein the band of plastic film has a series of openings formed therein underlying each of the strips of plastic mesh.

2. A packaging material according to claim 1, wherein the further strips of plastic film are bonded to the underlying plastic film by heat sealing.

3. A packaging material according to claim 1 or 2, wherein one or more of the plastic film and further film strips comprise polyethylene or polypropylene.

4. A packaging material according to any preceding claim, wherein said plastic film has a thickness substantially in the range of 30-60 microns.

5. A packaging material according to any preceding claim, wherein said plastic mesh has a weight of substantially 8 gsm.

6. A packaging material according to any preceding claim, wherein said plastic mesh comprises polypropylene.

7. A bag for fruit and vegetable produce formed from a continuous length of the packaging material according to any one of claims 1 to 6 formed into a tube by means of a longitudinal band and subsequently sub-divided into individual bags by means of a plurality of further bond lines orthogonal to the longitudinal band, wherein each further bond line is located in the plastic film between adjacent openings in said film.

8. A bag according to claim 1, wherein the bag has gusseted sides.

9. A method of producing a packaging material for fruit and vegetable produce comprising:
providing a continuous band of plastic film;
cutting out a series of openings in the plastic film;
providing a plurality of strips of plastic mesh overlying respective lines of said openings in the plastic film;
providing a plurality of reinforcing strips, each strip overlying an edge of a strip of plastic mesh; and
bonding the reinforcing strips to the underlying plastic film, whereby the edges of the plastic mesh strips are encapsulated between the reinforcing strips and the plastic film.
